Europäisches Patentamt

European Patent Office

Office européen des brevets

(11) Veröffentlichungsnummer: **0 498 241 A1**

## EUROPÄISCHE PATENTANMELDUNG

(21) Anmeldenummer: **92101220.9**

(22) Anmeldetag: **26.01.92**

(51) Int. Cl.5: **A23L 1/212**, A23B 7/02

(30) Priorität: **31.01.91 CH 300/91**

(43) Veröffentlichungstag der Anmeldung:
**12.08.92 Patentblatt 92/33**

(84) Benannte Vertragsstaaten:
**AT BE DE DK FR GB LU NL SE**

(71) Anmelder: **ZWEIFEL POMY-CHIPS AG**
**Kesselstrasse 5**
**CH-8957 Spreitenbach(CH)**

(72) Erfinder: **Böhler, Guido Bernard**
**Freyastrasse 4**
**CH 8004 Zürich(CH)**
Erfinder: **Carretto, Marco**
**Santa Croce 251**
**Venezia(IT)**

(74) Vertreter: **Blum, Rudolf Emil Ernst et al**
**c/o E. Blum & Co Patentanwälte Vorderberg 11**
**CH-8044 Zürich(CH)**

(54) **Verfahren zur Herstellung von genussfertigen, knusprigen Trockenprodukten aus Früchten.**

(57) Zur Herstellung von genussfertigen, knusprigen Trockenprodukten aus Früchten werden diese in frischem Zustand in Scheiben (9) von weniger als 3 mm Wanddicke geschnitten. Die Scheiben werden in einem Wellenschnitt geschnitten, so dass sie quer zur Schnittebene eine gewellte Struktur besitzen. Danach wird ihnen durch Trocknen ein wesentlicher Teil ihrer Feuchtigkeit entzogen. Durch den dünnen Schnitt kann verhindert werden, dass das Produkt hart wird. Die Wellenstruktur verhindert das Kleben der Scheiben und verleiht ihnen ausreichende mechanische Stabilität.

FIG. 3

FIG. 4

Es ist schon seit langem bekannt, zu Scheiben geschnittenes Obst, insbesondere Aepfel, durch Wasserentzug mittels Dörren haltbar zu machen. Die auf bekannte Art hergestellten, gedörrten Aepfel weisen eine elastische Konsistenz auf und sind an ihrer Aussenseite leicht klebrig. Sie neigen deshalb dazu, aneinander zu kleben und in der Verpackung zu verklumpen. Im Biss sind sie nachgiebig und beim Kauen neigen sie dazu, an den Zähnen kleben zu bleiben. Es wurde versucht, diese unerwünschten Eigenschaften durch stärkeres Trocknen zu beseitigen. Das so hergestellte Produkt wird aber hart und bieten beim Kauen einen starken Widerstand, vergleichbar dem Zerkauen eines Bonbons.

Es stellt sich auf diesem Hintergrund die Aufgabe, in einem einfachen Verfahren aus Früchten, insbesondere aus Aepfeln, ein Trockenprodukt herzustellen, das diese Eigenschaften nicht aufweist, sondern einen knusprigen Biss besitzt, der demjenigen von Pommes Chips vergleichbar ist, wobei jedoch kein Frittieren oder dergleichen in Frage kommt. Beim Fritieren tritt das Problem des Zusammenklebens wegen der plötzlichen Verdampfung des Wassers aus den Kartoffelscheiben, nicht auf.

Diese Aufgabe wird durch die in den Patentansprüchen genannten Merkmale gelöst.

Die dünne Schnittdicke führt dazu, dass das scheibenförmig geschnittene Produkt auch nach starkem Trocknen nicht hart, sondern knusprig wirkt. Die dünne Schnittdicke wird mit guter Ausbeute dadurch möglich, dass die geschnittenen Scheiben quer zur Schnittebene eine wellige Struktur aufweisen. Dies verhindert das Zusammenkleben und Verklumpen der geschnittenen Scheiben vor und während des Trocknensund führt zu einer wesentlich rascheren Trocknung sowie zu einer mechanischen Stabilität der Scheibe gegen Bruch, wie noch erläutert wird. Zudem erhöht die Wellenstruktur den Eindruck der Knusprigkeit, weil die über der Wellenstruktur gemessene und im Mund gefühlte Gesamtdicke wesentlich grösser ist, als die eigentliche Wanddicke der Scheibe. Das Produktevolumen erhöht sich, was im Hinblick auf die Herstellung von Portionenpackungen vorteilhaft ist.

Weitere Eigenschaften und Vorteile des Verfahrens und des entsprechenden Produkts ergeben sich aus der nachfolgenden Beschreibung eines Ausführungsbeispiels anhand der Zeichnungen. Dabei zeigt:

Figur 1 eine schematische Darstellung des Verfahrensablaufs der Herstellung;

Figur 2 die von der Schneidmaschine erzeugte Schnittform, etwa in zweifacher Vergrösserung;

Figur 3 eine geschnittene Apfelscheibe in Aufsicht, und

Figur 4 die Apfelscheibe von Figur 3 in Seitenansicht.

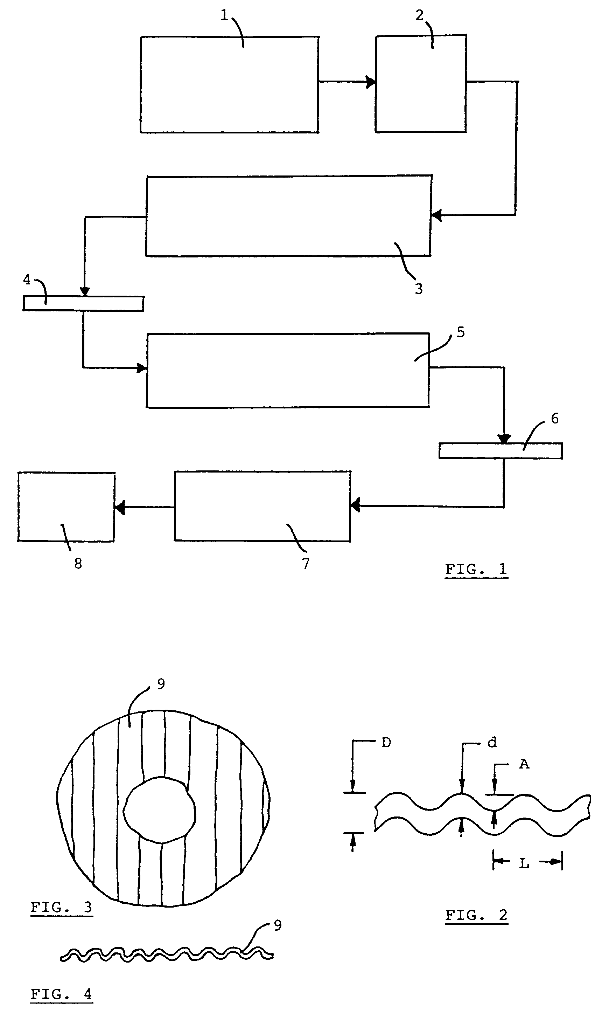

Zunächst werden anhand von Figur 1 die einzelnen Schritte des Verfahrens und ihre Abfolge erläutert. Die hierfür verwendeten Anlagen sind an sich konventioneller Art und dem Fachmann bekannt. Eine detaillierte Beschreibung derselben erübrigt sich deshalb.

Das frische Obst, im vorliegenden Beispiel Aepfel, wird zunächst in einer Schneidmaschine 1 in Scheiben geschnitten. Zuvor kann das Apfelgehäuse ausgestanzt werden, was indessen nicht zwingend ist.

In der Schneidmaschine 1 werden durch entsprechende Wahl der Messer, Scheiben mit einer Wandstärke d von ca. 2,5 mm geschnitten und zwar in einem Wellenschnitt (vergl. Figur 2). Die entstehenden Scheiben weisen damit eine quer zur Schnittebene gewellte Struktur auf.

Figur 2 zeigt in doppelter Grösse die im vorliegenden Ausführungsbeispiel gewählten Masse dieses Wellenschnittes. Die Amplitude A der Welligkeit beträgt ca. 2 mm und deren Wellenlänge L ca. 5 bis 6 mm. Während die Wandstärke d mit 2.5 mm unter einer Dicke von 3 mm liegt, beträgt die über den Wellen gemessene Gesamtdicke D etwa 5.5 mm. Es versteht sich, dass diese Massangaben nicht zwingend sind, sondern in einem gewissen Spielraum variert werden können. Die Wandstärke d sollte jedoch 3 mm nicht wesentlich überschreiten, da das getrocknete Produkt sonst härter wird. Es können auch Schnitte mit einer anderen als der in Fig. 2 gezeigten Wellenform verwendet werden.

Als Schneidmaschine wird mit Vorteil z.B. eine Zentrifugalschneidmaschine gewählt, bei der die geschnittenen Scheiben chaotisch geschüttet werden, so dass eine zufällige Ausrichtung der Wellenstruktur der aufeinander liegenden Scheiben entsteht.

Die infolge der Wellenstruktur so entstehende lockere Schüttung verhindert wegen der geringen gegenseitigen Berührungsflächen das Aneinanderkleben der geschnittenen, dünnen Scheiben, insbesondere in den nachfolgenden Trockungsvorgängen, wie noch erläutert wird.

Nach dem Schneiden erfolgt eine Farbstabilisierung der geschnittenen Scheiben in einem mit der Ziffer 2 bezeichneten Anlagenteil. Damit wird erreicht, dass während und nach dem Trocknen die helle Farbe des Fruchtfleisches bewahrt wird.

Anschliessend werden den geschnittenen Scheiben zur Vortrocknung in einem Heissluftbandtrockner 3 Feuchtigkeit entzogen. Im Vortrockner 3 kleben die Scheiben infolge des wellenförmigen Schnitts nur geringfügig aneinander. Es bilden sich praktisch keine Klumpen, bzw. doppelte oder mehrfach aneinander haftende Stücke, da die Trennwirkung der Luftbewegung stärker ist, als die geringe Klebwirkung der Oberflächenfeuchtigkeit an den kleinen Berührungsflächen zwischen den gewellten Flächen der Scheiben. Auf besondere Massnahmen zur Vereinzelung, wie Trocknung im Wirbelbett oder mechanische Trennung, kann damit verzichtet werden. Dies gestattet es, trotz der kleinen Wanddicke die Bruchquote tief und die Ausbeute hoch zu halten. Die lockere Schüttung bzw. die durch die Wellenstruktur zwischen den einzelnen Scheiben entstehenden Hohlräume bewirken eine wesentliche raschere Trocknung, wobei die Trochnungszeit auf ca. 1/3 des Wertes für ebene Scheiben reduziert wird.

Nach der ersten Trocknungsstufe passieren die vorgetrockneten Stücke ein Sieb 4, mittels welchem Bruchstücke mit einem Druchmesser von weniger als 2,5 cm ausgeschieden werden. Die restlichen Stücke gelangen gegebenenfalls, in einen Vakuumtrockner 5, wo ihnen die Feuchtigkeit bis auf 2,5 % entzogen wird. Die soweit getrockneten, dünnen Apfelscheiben durchlaufen danach erneut ein Sieb 6 zum Ausscheiden der beim Vakuumtrocknen und Manipulieren entstandenen Bruchstücke. Danach erfolgt auf einer Kontrollstrecke 7 eine visuelle Kontrolle und Aussortierung von Ausschuss, z.B. von verfärbten Stücken. Anschliessend wird das Produkt auf einer Verpackungsmaschine 8 in feuchtigkeitsdichte Beutel verpackt. Es werden vorzugsweise Portionenbeutel abgefüllt, weil das getrocknete Produkt hygroskopisch ist und seine Knusprigkeit mit der Zeit verliert, wenn die Packung offen stehen gelassen wird.

In den Figuren 3 und 4 ist eine solche Apfelscheibe 9 in Aufsicht und Seitenansicht gezeigt. Die getrockneten Scheiben können zusätzlich zur beschriebenen Wellenstruktur noch Krümmungen aus der Ebene heraus aufweisen. Die in den Figuren angedeutete Wellenstruktur der Apfel- bzw. Obstscheiben hat zusätzlich zu den bereits erwähnten Effekten den Vorteil, die Bruchstabilität der Scheiben während der Herstellung, aber auch beim Transport und Verkauf zu erhöhen.

Die Wellenstruktur führt aus statischen Gründen zu einer Erhöhung der Bruchfestigkeit in den Richtungen quer zur Wellenausdehnung. Dies ist besonders wichtig bei der geringen Wanddicke und der Brüchigkeit im getrockneten Zustand, welche Voraussetzung für die angestrebte Knusprigkeit ist. Im ganzen Herstellungsprozess ergibt sich dank der erhöhten Bruchstabilität ein Anteil von weniger als 15 % auszuscheidender Kleinteilen.

Die Wellenstruktur erhöht ferner beim Konsumieren den Eindruck der Knusprigkeit, indem beim Zerbeissen die Gesamtdicke D und nicht nur die Wandstärke d fühlbar ist, und die Wellenstruktur dem Biss einen gewissen Widerstand entgegensetzt, ohne dass das Produkt selbst hart ist.

Obwohl das Verfahren hier im Zusammenhang mit Aepfeln beschrieben wurde, kann es in entsprechender Abwandlung auch auf anderes Obst, z.B. Birnen, angewendet werden.

**Patentansprüche**

1. Verfahren zur Herstellung von genussfertigen, knusprigen Trockenprodukten aus Früchten, dadurch gekennzeichnet, dass die Früchte in frischem Zustand mittels einer Schneidmaschine in Scheiben mit einem Wellenschnitt geschnitten werden, derart, dass die geschnittenen Scheiben quer zur Schnittebene eine gewellte Struktur aufweisen und dass den geschnittenen Scheiben in mindestens einem Trocknungsvorgang ein wesentlicher Teil ihrer Feuchtigkeit entzogen wird.

2. Verfahren nach Anspruch 1, dadurch gekennzeichnet, dass der Trocknungsvorgang unter Anwendung von Warmluft und gegebenenfalls anschliessendem Vakuumtrocknen erfolgt.

3. Verfahren nach einem der vorangehenden Ansprüche, dadurch gekennzeichnet, dass die Früchte mit einer Wanddicke bis zu etwa 3 mm geschnitten werden.

4. Verfahren nach Anspruch 3, dadurch gekennzeichnet, dass die Form des Wellenschnitts im wesentlichen sinusförmig ist.

5. Verfahren nach einem der Ansprüche 3 oder 4, dadurch gekennzeichnet, dass die Wellenlänge der Wellenstruktur zwischen 1 mm bis 10 mm beträgt.

6. Verfahren nach einem der Ansprüche 3 bis 5, dadurch gekennzeichnet, dass die Amplitude der welligen Struktur eine Amplitude von ca. 2 mm aufweist.

7. Verfahren nach einem der vorangehenden Ansprüche, dadurch gekennzeichnet, dass die geschnittenen Scheiben eine über ihre Fläche im wesentlichen konstante Dicke aufweisen.

8. Verfahren nach einem der Ansprüche 3 bis 7, dadurch gekennzeichnet, dass zum Schneiden der Scheiben eine Schneidmaschine verwendet wird, bei welcher die geschnittenen Scheiben in ungeordneter, lockerer Schüttung anfallen.

9. Verfahren nach Anspruch 8, dadurch gekennzeichnet, dass die geschnittenen Scheiben in der ungeordneten, lockeren Schüttung getrocknet werden, mit der sie aus der Schneidmaschine anfallen.

10. Trockenprodukt, hergestellt aus Aepfeln, nach dem Verfahren gemäss einem der Ansprüche 1 bis 9, in Form von Scheiben in einer Dicke von weniger als 3 mm, vorzugsweise ca. 2 mm, und einer welligen Struktur.

11. Trockenprodukt nach Anspruch 10, dadurch gekennzeichnet, dass die Scheiben zur Erhöhung der Bruchresistenz aussen von den belassenen Aepfelschalen umgeben sind.

12. Trockenprodukte nach Anspruch 10 oder 11, dadurch gekennzeichnet, dass die Schüttdichte unter 50 gr/lt liegt.

FIG. 1

FIG. 3

FIG. 2

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A- 673 374 (W. HUNGERBÜHLER et al.)(15-03-1991) <br> * Ansprüche 1,5,7,8; Seite 2, Spalte 2, Zeilen 12-20 * <br> --- | 1-7,9, 10 | A 23 L 1/212 <br> A 23 B 7/02 |
| Y | US-A-4 650 684 (N.B. PENROSE)(17-03-1987) <br> * Abbildungen 1,3; Spalte 3, Zeilen 40-45; Spalte 1, Zeilen 7-10 * <br> --- | 1-7,9, 10 | |
| A | EP-A-0 330 563 (J. TRICOIT et al.) <br> * Spalten 1,2 * <br> --- | 1,2,3 | |
| A | US-A-4 855 151 (M.S. FIELDING) <br> --- | | |
| A | GB-A-2 172 185 (R.J. PRIESTLEY et al.) <br> --- | | |
| A | GB-A-1 030 821 (COLGATE-PALMOLIVE CO.) <br> --- | | |
| A | DE-A-2 743 230 (H. VOGT) <br> --- | | |
| A | US-A-4 933 194 (D.L. BARRY et al.) <br> --- | | RECHERCHIERTE SACHGEBIETE (Int. Cl.5) |
| A | EP-A-0 284 041 (Y. MATSUMURA et al.) <br> ----- | | A 23 L 1 <br> A 23 B 7 |

Der vorliegende Recherchenbericht wurde für alle Patentansprücbe erstellt

| Recherchenort | Abschlußdatum der Recherche | Prüfer |
|---|---|---|
| DEN HAAG | 21-04-1992 | GUYON R.H. |